# FASCICULE DE BREVET EUROPEEN

(11) **EP 3 272 210 B1**
(45) Date de publication et mention de la délivrance du brevet: **06.03.2024**
(21) Numéro de dépôt: 17305862.9
(22) Date de dépôt: 04.07.2017
(51) Int. Cl.: A01G 23/06, A01D 34/535, A01G 23/093

(54) **ROTOR POUR APPAREIL DE DÉBROUSSAILLAGE**
ROTOR FÜR GERÄT ZUR GESTRÜPPENTFERNUNG
ROTOR FOR CLEARING APPARATUS

(30) Priorité: 22.07.2016 FR 1657009
(43) Date de publication de la demande: 24.01.2018
(73) Titulaire: Kuhn-Audureau SAS, 85260 La Copechagnière (FR)
(72) Inventeur: LE GUYADER, Dimitri, 44200 Nantes (FR); GAUTRON, Pascal, 85250 Saint-Fulgent (FR)
(74) Mandataire: Cabinet Nuss

(56) Documents cités:
- EP-A1- 2 772 128
- FR-A5- 2 211 841
- US-A- 5 003 759
- US-A- 5 848 627
- Forges Gorce: "Catalogue pièces d'usure broyeurs Forges Gorce 2014", , 31 décembre 2014 (2014-12-31), pages 1-43, XP055360155, Peschadoires France Extrait de l'Internet: URL:http://www.forges-gorce.fr/public/FORG ES-GORCE_CATALOGUE_2014-light.pdf [extrait le 2017-03-29]

## Description

La présente invention se rapporte au domaine du machinisme agricole et plus particulièrement au domaine des systèmes d'entrainement d'outils de coupe pour appareil de débroussaillage.

Il existe actuellement des rotors de débroussaillage construits sous la forme d'un axe tubulaire principal formant un moyeu et sur lequel sont montés différents outils de coupe. Ces outils de coupe sont montés avec le moyeu par l'intermédiaire de flancs ou oreilles portant plusieurs axes de rotation satellites pour les outils de coupe.

En fonction du type de végétation à débroussailler, les outils utilisés présentent un poids plus ou moins élevé de façon à avoir, sous l'effet de la force centrifuge, une inertie adaptée pour entailler, voire sectionner, au mieux la végétation en fonction de l'épaisseur de l'herbe ou des branchages à débroussailler.

Toutefois, le poids des outils conditionnant l'efficacité de l'opération de coupe, le rotor n'est alors adapté que pour entraîner en rotation des outils ayant une gamme de poids définie. Par ailleurs, un utilisateur aura tendance à faire fonctionner le rotor de débroussaillage au-delà des limites de résistance préconisées.

Pour anticiper, l'altération des outils de coupe dans le cadre d'une utilisation « hors-limite », une solution consiste à installer des outils plus lourds. Cependant, cette solution impacte l'axe tubulaire principal du rotor qui est amené à supporter un risque de déformation.

Pour contourner ce risque de déformation, des axes tubulaires, dits « cages à écureuil » de plus gros diamètre ont été conçus, comportant des ouvertures aménagées pour ne pas empêcher la rotation satellite des outils de coupe. Si cette solution permet l'obtention d'un axe tubulaire renforcé, il présente en revanche l'inconvénient d'augmenter le poids du rotor, ce qui complexifie sa manipulation lors de son utilisation et nécessite plus de puissance pour être entraîné en rotation. Un exemple de ce type est proposé par la publication US 5 003 759.

La présente invention a notamment pour but de pallier cet inconvénient en proposant un rotor pour appareil de débroussaillage apte à être utilisé dans le cadre d'un débroussaillage mixte grâce à des outils suffisamment adaptés et sans présenter un poids excessif susceptible d'en altérer sa manipulation.

L'invention a ainsi pour objet un rotor pour appareil de débroussaillage selon la revendication 1.

L'invention porte également sur appareil de débroussaillage caractérisé en ce qu'il comprend un rotor tel que défini selon la revendication 8.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 est une représentation schématique d'un exemple de rotor selon l'invention selon une section dans un plan perpendiculaire à l'axe de rotation du rotor,
- la figure 2 est une représentation schématique d'un exemple de rotor selon l'invention présenté selon une vue de trois-quarts.

La présente invention se rapporte à un rotor 1 pour appareil de débroussaillage comprenant :
- une pièce axiale 2 et entrainée en rotation autour de son axe formant un axe central 2bis,
- au moins un outil 3 monté en rotation autour d'un axe périphérique 3bis, cet axe périphérique 3bis étant disposé parallèle à l'axe central 2bis et maintenu en position et entraîné en rotation avec la pièce axiale 2 par au moins une structure montée solidaire avec la pièce axiale 2,
caractérisé en ce que la pièce axiale 2 et la position de l'outil 3 sont réalisées de sorte que le rapport entre le rayon de rotation de l'outil 3 dans lequel il s'inscrit autour de l'axe périphérique 3bis et le diamètre de la pièce axiale 2 présente un ratio inférieur à 0,46 en ce que la pièce axiale 2 comprend une structure dépourvue d'ouvertures aménagées, et en ce que le diamètre de travail 8 du rotor 1 est compris entre 300 mm et 500 mm.

Le rotor 1 selon l'invention permet d'obtenir une adaptation optimisée des outils 3 au diamètre de la pièce axiale 2 pour entraîner en rotation ces outils 3 en ne nécessitant qu'un minimum de puissance. Avec une construction présentant un ratio inférieur à 0,46, le rotor 1 est fiable en montrant une sensibilité réduite aux risques de déformation lors de son utilisation.

Le rotor 1 selon l'invention est préférentiellement un rotor 1 polyvalent destiné à être utilisé pour faire du débroussaillage mixte, c'est-à-dire que ce type de rotor 1 permet à la fois une découpe d'herbe et de branchages.

Selon un mode de construction préféré, la pièce axiale 2 peut être réalisée sous la forme d'un tube creux ou d'un élément axial plein. Bien que la section de la pièce axiale 2 présente préférentiellement la forme d'un cercle, cette section peut adopter d'autres formes telles que triangle, carré, polygone, etc... susceptibles de faciliter le montage et la fixation d'au moins un outil 3 sur cette pièce axiale 2.

Selon une construction préférée de la pièce axiale 2, celle-ci présente une structure dépourvue d'ouvertures aménagées. Cette construction du rotor 1 formé par un tube continu sans ouverture présente l'avantage d'être à la fois simple et robuste. De plus, l'équilibrage d'un tel rotor 1 s'en trouve facilité.

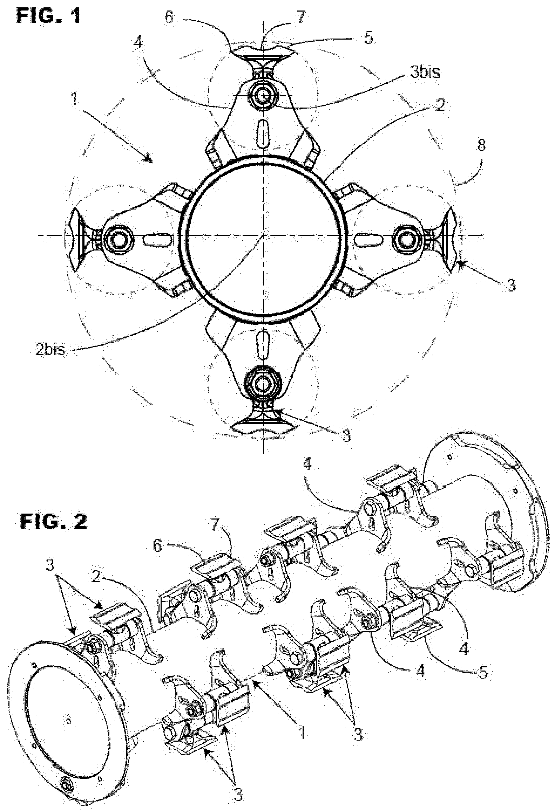

Selon l'invention l'axe périphérique 3bis de rotation de l'outil 3 est disposé de façon parallèle à l'axe de la pièce axiale 2. Préférentiellement, pour garantir l'équilibrage du rotor 1, le rotor 1 comprend plusieurs axes périphériques 3bis portant des outils de coupe 3 respectifs. Ainsi, comme illustré sur la figure 1, le rotor 1 comprend une pluralité d'outils 3 positionnés de sorte que le centre de gravité de l'ensemble soit aligné sur l'axe central 2bis de rotation de la pièce axiale 2.

De façon alternative ou complémentaire, l'équilibrage d'un axe périphérique 3bis portant un outil 3 est réalisé par un élément formant contrepoids.

Grâce à un rapport entre le rayon de rotation de l'outil 3 dans lequel il s'inscrit autour de l'axe périphérique 3bis et le diamètre de la pièce axiale 2 qui est inférieur à 0,46, la pièce axiale 2 présente un diamètre dont la proportion par rapport au rayon hors-tout de rotation de l'outil 3 est suffisamment importante pour résister aux risques de déformation et aux éventuels problèmes d'équilibrage susceptibles d'être rencontrés.

Selon une particularité de construction, le rotor 1 de l'invention est caractérisé en ce que la structure de montage solidaire de l'axe périphérique 3bis avec le tube creux est réalisé par au moins une paire d'oreilles 4. Ces oreilles 4 sont réalisées par des flancs au moins préférentiellement montés aux extrémités de la pièce axiale 2. Ces oreilles 4 permettent le positionnement d'au moins un axe périphérique 3bis pour la rotation d'au moins un des outils 3 en portant et maintenant l'axe périphérique 3bis à distance de la pièce axiale 2.

Selon une autre particularité de construction, le rotor 1 de l'invention est caractérisé en ce que le rayon de rotation de l'outil 3 autour de l'axe périphérique 3bis est préférentiellement d'au plus 60 mm, idéalement d'au plus 80 mm. L'outil 3 présente ainsi une taille réduite qui permet simultanément une réduction de son poids et facilite conjointement l'équilibrage du rotor 1 sur lequel l'outil 3 est monté.

Selon une autre particularité de construction susceptible d'être complémentaire, le diamètre du tube creux est compris préférentiellement entre 150 mm et 300 mm, idéalement compris entre 110 mm et 350 mm.

Selon une autre particularité de construction susceptible d'être complémentaire, le diamètre de travail 8 du rotor 1 est compris idéalement entre 300 mm et 500 mm, préférentiellement compris entre 350 mm et 400 mm.

Selon une particularité de construction d'au moins un outil 3, celui-ci est réalisé de sorte que le centre de gravité de l'outil 3 est positionné de façon la plus écartée de l'axe périphérique 3bis de rotation. Cet arrangement écarté de l'outil 3 par rapport à son axe de rotation périphérique 3bis permet d'optimiser la force centrifuge de l'outil 3 en rotation ainsi que la vitesse et la force de l'outil 3 en déplacement autour de l'axe de rotation périphérique 3bis. De même, en positionnant l'outil 3 de façon écartée par rapport à l'axe périphérique 3bis de rotation, l'inertie de l'outil 3 est augmentée pour en optimiser l'impact sur le végétal à débroussailler. De façon complémentaire, le positionnement du centre de gravité de l'outil 3 à distance de l'axe périphérique 3bis de rotation est réalisé conjointement avec son positionnement, sous l'effet de la force centrifuge, à distance de l'axe central 2bis de rotation lorsque le rotor 1 est actionné à vide, c'est-à-dire sans que l'outil 3 n'impacte un végétal.

Selon l'invention, l'outil 3 est réalisé par un couteau 5 monté sur l'axe 3bis de rotation périphérique de sorte que, d'une part, le tranchant 6 du couteau 5 soit positionné selon un axe parallèle à l'axe périphérique 3bis de rotation et, d'autre part, le tranchant 6 du couteau 5 le plus éloigné de l'axe périphérique 3bis de rotation réalise la surface de l'outil 3 la plus éloignée de l'axe périphérique 3bis de rotation. Cette construction particulière du couteau 5 permet de positionner le tranchant 6 du couteau 5 de façon optimisée pour profiter de l'inertie de l'outil 3 et opérer une pénétration maximale du tranchant 6 dans le végétal lors de l'impact de l'outil 3 avec le végétal au cours du débroussaillage.

Selon une spécificité de construction de ce couteau 5, au moins une partie de la surface du couteau 5 qui est la plus éloignée de l'axe périphérique 3bis de rotation s'inscrit dans un cylindre centré sur l'axe périphérique 3bis de rotation et de rayon identique au rayon de rotation de l'outil 3 autour de l'axe périphérique 3bis de rotation.

Selon l'invention, au moins une partie de la surface du couteau 5 qui est extérieure par rapport à l'axe périphérique 3bis de rotation comporte un évidement 7. Cet évidement 7 est réalisé dans l'épaisseur de la surface de couteau 5. Selon un mode de construction préféré, cet évidement 7 est réalisé de façon non-traversante. Cet évidement 7 permet de limiter, voire d'éviter, le talonnement sur la face de dépouille du couteau 5 et donc le risque d'éclatement de la végétation lors de la coupe du bois.

L'invention porte également sur appareil de débroussaillage caractérisé en ce qu'il comprend un rotor 1 tel que défini selon l'invention

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Rotor (1) pour appareil de débroussaillage comprenant :
- une pièce axiale (2) et entraînée en rotation autour de son axe formant un axe central (2bis),
- au moins un outil (3) monté en rotation autour d'un axe périphérique (3bis), cet axe périphérique (3bis) étant disposé parallèle à l'axe central (2bis) et maintenu en position et entraîné en rotation avec la pièce axiale (2) par au moins une structure montée solidaire avec la pièce axiale (2),
dans lequel la pièce axiale (2) et la position de l'outil (3) sont réalisées de sorte que le rapport entre le rayon de rotation de l'outil (3) dans lequel il s'inscrit autour de l'axe périphérique (3bis) et le diamètre de la pièce axiale (2) présente un ratio inférieur à 0,46, et l'outil (3) est réalisé par un couteau (5) monté sur l'axe (3bis) de rotation périphérique de sorte que, d'une part, le tranchant (6) du couteau (5) soit positionné selon un axe parallèle à l'axe périphérique (3bis) de rotation et, d'autre part, le tranchant (6) du couteau (5) le plus éloigné de l'axe périphérique (3bis) de rotation réalise la surface de l'outil (3) la plus éloignée de l'axe périphérique (3bis) de rotation, **caractérisé en ce que** au moins une partie de la surface du couteau (5) qui est extérieure par rapport à l'axe périphérique (3bis) de rotation comporte un évidement (7).

2. Rotor (1) pour appareil de débroussaillage selon la revendication 1, **caractérisé en ce que** la structure de montage solidaire de l'axe périphérique (3bis) avec la pièce axiale (2) est réalisé par au moins une paire d'oreilles (4).

3. Rotor (1) pour appareil de débroussaillage selon une des revendications précédentes, **caractérisé en ce que** le rayon de rotation de l'outil (3) autour de l'axe périphérique (3bis) est d'au plus 80 mm.

4. Rotor (1) pour appareil de débroussaillage selon une des revendications précédentes, **caractérisé en ce que** le diamètre de la pièce axiale (2) est compris entre 150 mm et 300 mm.

5. Rotor (1) pour appareil de débroussaillage selon une des revendications précédentes, **caractérisé en ce que** au moins un outil (3) est réalisé de sorte que le centre de gravité de l'outil (3) est positionné de façon la plus écartée de l'axe périphérique (3bis) de rotation.

6. Rotor (1) pour appareil de débroussaillage selon une des revendications précédentes, **caractérisé en ce qu'**au moins une partie de la surface du couteau (5) qui est la plus éloignée de l'axe périphérique (3bis) de rotation s'inscrit dans un cylindre centré sur l'axe périphérique (3bis) de rotation et de rayon identique au rayon de rotation de l'outil (3) autour de l'axe périphérique (3bis) de rotation.

7. Rotor (1) pour appareil de débroussaillage selon une des revendications précédentes, **caractérisé en ce que** la pièce axiale (2) comprend une structure dépourvue d'ouvertures aménagées.

8. Appareil de débroussaillage **caractérisé en ce qu'**il comprend un rotor (1) tel que défini selon l'une des revendications 1 à 7.

## Patentansprüche

1. Rotor (1) für Böschungsmäher mit:
- einem axialen Teil (2), das um seine Achse, die eine Mittelachse (2bis) bildet, in Drehung versetzt ist,
- mindestens einem Werkzeug (3), das drehbar um eine Peripherieachse (3bis) angebracht ist, wobei diese Peripherieachse (3bis) parallel zur Mittelachse (2bis) angeordnet und mittels mindestens eines Rahmens, der fest mit dem axialen Teil (2) verbunden ist, in Position gehalten und mit dem axialen Teil (2) in Drehung versetzt wird,
in welchem der axiale Teil (2) und die Stellung des Werkzeugs (13) derart durchgeführt sind, dass das Verhältnis zwischen dem Drehradius in welchem sich das Werkzeug (3) um die Peripherieachse (3bis) bewegt und der Durchmesser des axialen Teils (2), ein Quote unter 0,46 beträgt, und das Werkzeug (3) von einem Messer (5) durchgeführt ist, das derart auf der Peripheriedrehachse (3bis) angebracht ist, dass einerseits die Schneidkante (6) des Messers (5) gemäss einer zur Peripheriedrehachse (3bis) parallelen Achse positioniert ist und andererseits die Schneidkante (6) von dem am weitesten von der Peripherieachse (3bis) entfernten Messer (5), die Oberfläche des am weitesten von der Peripheriedrehachse (3bis) entfernten Werkzeug (3) bildet, **dadurch gekennzeichnet, dass** mindestens ein Teil der Oberfläche des Messers (5), das sich aussen in Bezug auf die Peripheriedrehachse (3bis) erstreckt, eine Aushöhlung (7) aufweist.

2. Rotor (1) für Böschungsmäher nach Anspruch 1, **dadurch gekennzeichnet, dass** der Rahmen, der fest mit der Peripherieachse (3bis) mit dem axialen Teil (2) verbunden ist, von mindestens einem Paar von Flanken (4) durchgeführt ist.

3. Rotor (1) für Böschungsmäher nach einem der vorhergehenden Ansprüche, **dadurch gekennzeichnet, dass** der Drehradius des Werkzeugs (3) um die Peripherieachse (3bis) maximal 80 mm ist.

4. Rotor (1) für Böschungsmäher nach einem der vorhergehenden Ansprüche, **dadurch gekennzeichnet, dass** der Durchmesser des axialen Teils (2) zwischen 150 mm and 300 mm ist.

5. Rotor (1) für Böschungsmäher nach einem der vorhergehenden Ansprüche, **dadurch gekennzeichnet, dass** mindestens ein Werkzeug (3) derart durchgeführt ist, dass der Schwerpunkt des Werkzeugs (3) auf der von der Peripheriedrehachse (3bis) am weitesten entfernte Weise positioniert ist.

6. Rotor (1) für Böschungsmäher nach einem der vorhergehenden Ansprüche, **dadurch gekennzeichnet, dass** mindestens ein Teil der Oberfläche des Messers (5), die am weitesten von der Peripheriedrehachse (3bis) ist, sich innerhalb eines Zylinders erstreckt, der auf die Peripheriedrehachse (3bis) zentriert ist und einen zum Schwenkradius des Werkzeugs (3) um die Peripheriedrehgelenkachse (3bis) gleichen Radius aufweist.

7. Rotor (1) für Böschungsmäher nach einem der vorhergehenden Ansprüche, **dadurch gekennzeichnet, dass** das axiale Teil (2) einen Rahmen ohne Öffnungen aufweist.

8. Böschungsmäher **dadurch gekennzeichnet, dass** er einen Rotor (1) gemäss einem der Ansprüche 1 bis 7 aufweist.

## Claims

1. Rotor (1) for hedge and grass cutting apparatus comprising:
- an axial part (2) driven in rotation about its axis forming a central axis (2 bis),
- at least one tool (3) mounted so as to rotate about a peripheral axis (3bis), this peripheral axis (3bis) being arranged parallel to the central axis (2bis), held in position and driven in rotation with the axial part (2) by at least one frame rigidly fastened to the axial part (2),
wherein the axial part (2) and the position of the tool (3) are carried out in such a way that the ratio between the radius of rotation of the tool (3), in which it lies about the peripheral axis (3bis), and the diameter of the axial part (2) is less than 0.46, and
the tool (3) is carried out by a blade (5) mounted on the peripheral axis (3bis) of rotation so that, firstly, the cutting edge (6) of the blade (5) is positioned along an axis parallel to the peripheral axis (3bis) of rotation and, secondly, the cutting edge (6) of the blade (5) furthest away from the peripheral axis (3bis) of rotation forms the surface of the tool (3) furthest away from the peripheral axis (3bis) of rotation, **characterized in that** at least one part of the surface of the blade (5) which is exterior relative to the peripheral axis (3bis) of rotation has a cut-out (7).

2. Rotor (1) for hedge and grass cutting apparatus according to claim 1, **characterized in that** the frame which is rigidly fastened to the peripheral axis (3bis) with the axial part (2) consists of at least one pair of flanks (4).

3. Rotor (1) for hedge and grass cutting apparatus according to one of the preceding claims, **characterized in that** the radius of rotation of the tool (3) about the peripheral axis (3bis) is at most 80 mm.

4. Rotor (1) for hedge and grass cutting apparatus according to one of the preceding claims, **characterized in that** the diameter of the axial part (2) is between 150 mm and 300 mm.

5. Rotor (1) for hedge and grass cutting apparatus according to one of the preceding claims, **characterized in that** at least one tool (3) is carried out so that the center of gravity of the tool (3) is positioned as far away as possible from the peripheral axis (3bis) of rotation.

6. Rotor (1) for hedge and grass cutting apparatus, according to one of the preceding claims, **characterized in that** at least one part of the surface of the blade (5) which is furthest away from the peripheral axis (3bis) of rotation lies in a cylinder centered on the peripheral axis (3bis) of rotation and having a radius identical to the radius of rotation of the tool (3) about the peripheral axis (3bis) of rotation.

7. Rotor (1) for hedge and grass cutting apparatus according to one of the preceding claims, **characterized in that** the axial part (2) comprises a frame without openings.

8. Hedge and grass cutting apparatus **characterized in that** it comprises a rotor (1) as defined according to one of claims 1 to 7.
